# FASCICULE DE BREVET EUROPEEN

(11) **EP 1 658 221 B1**
(45) Date de publication et mention de la délivrance du brevet: **28.03.2007**
(21) Numéro de dépôt: 04767408.0
(22) Date de dépôt: 22.06.2004
(51) Int. Cl.: B64C 3/54, B64C 31/028

(54) **AILE RIGIDE DE PORTANCE VARIABLE PAR DEPLOIEMENT D'UNE AILE SOUPLE**
STARRER FLÜGEL MIT VARIABLEM AUFTRIEB AUFGRUND DES AUSKLAPPENS EINES FLEXIBLEN FLÜGELS
RIGID WING WITH VARIABLE SUSTENTATION DUE TO DEPLOYMENT OF A FLEXIBLE WING

(30) Priorité: 25.06.2003 FR 0307678
(43) Date de publication de la demande: 24.05.2006
(73) Titulaire: Lisa Airplanes, 73370 La Bourget du Lac (FR)
(72) Inventeur: Herzberger, Erick, 74000 Annecy (FR)
(74) Mandataire: Hecké, Gérard
(86) Numéro de dépôt international: PCT/FR2004/001552
(87) Numéro de publication internationale: WO 2005/000672

(56) Documents cités:
- FR-A- 812 036
- GB-A- 489 853
- US-A- 4 460 138
- US-A- 5 052 641

## Description

L'invention concerne une aile de portance variable utilisable sur des petits avions ou des ULM.

Depuis que l'homme tente de voler et a réussi à concevoir des machines pour cela il n'a eu de cesse d'améliorer les techniques pour renforcer la sécurité des avions, accroître la maniabilité et les performances tant dans le domaine des hautes vitesses que dans celui des petits avions pouvant emporter une ou deux personnes.

Du point de vue de la technique de conception d'un avion le problème de la sustentation et du calcul de la voilure dans les différentes configurations de vol est probablement le plus ancien souci du concepteur d'aéroplanes.

En effet, les systèmes de sustentation d'un engin volant doivent couvrir des domaines de vol allant du décollage atterrissage jusqu'à la vitesse maximum. Pour les phases de décollage et d'atterrissage la vitesse recherchée, pour des raisons de sécurité, doit être la plus faible possible. En phase de vol stabilisé, dit de croisière, afin de franchir des distances importantes dans les temps les plus courts, la vitesse doit être la plus élevée possible. Le dimensionnement d'une aile pour les deux domaines de vol est donc contradictoire.

Plus précisément la phase de décollage et d'atterrissage nécessite une surface de portance maximale, principalement atteinte par la dimension de l'aile. Alors que pour atteindre une vitesse satisfaisante en vol stabilisé l'aile doit disposer d'un coefficient de traînée faible et d'une surface réduite.

L'optimisation des performances d'un aéroplane conduit donc à fabriquer des ailes de géométrie variable, ce qui est déjà réalisé depuis de nombreuses années sur les avions de chasse et sur les avions de ligne.

Les dispositifs connus pour les avions de chasse et de ligne connus sous l'appellation de systèmes d'hypersustentation ne sont pas applicables au domaine des petits avions en raison du poids et de la complexité des systèmes.

Dans ce domaine des petits avions et des ULM une technique connue concerne le déploiement d'une surface flexible entre le bord de fuite de l'aile et la queue de l'appareil, tel que cela est décrit dans le document WO9845171. Ce dispositif consiste à dérouler une voile flexible enroulée sur un axe parallèle au fuselage de l'avion au moyen de câbles tracteurs permettant le déploiement vers le bout des ailes. La voile de forme triangulaire est progressivement déroulée pour augmenter la portance de l'appareil. Un tel dispositif est également connu dans le domaine nautique.

Les limitations de tels systèmes, à enroulement autour d'un axe, sont également bien établis. Le déploiement de la voilure, sous l'action de contraintes extérieures importantes, un vent violent par exemple, entraîne des difficultés de la manoeuvre d'enroulement déroulement, voire même un blocage du dispositif. Les contraintes mécaniques sur les câbles tracteurs sont très importantes pouvant entraîner une usure prématurée et une rupture de ceux-ci. Il faut noter aussi que les efforts de traction sont reportés au bout des ailes, ce qui est mécaniquement dommageable.

D'autres dispositifs pour le déploiement de surfaces portantes additionnelles ont été imaginés, et US 4 460 138, notamment par pivotement de surfaces rigides incorporées dans l'aile, tel que cela est cité dans les documents US1215295 ou US2137047. Il a également été envisagé de déplier par coulissement des panneaux imbriqués les uns dans les autres tel que cela est décrit dans US4106727.

Tous ces systèmes ne peuvent pas s'appliquer au domaine des petits avions ou des ULM pour lequel on peut constater qu'il n'existe pas à ce jour de solution industrialisée fiable et spécifique.

L'invention a donc pour objectif de résoudre ces principales difficultés, c'est à dire qu'elle propose un aile dépliable permettant d'augmenter la portance de l'avion dans les configurations de décollage et d'atterrissage, puis autorise une réduction de la voilure en phase de vol stabilisé.

L'invention concerne une aile de portance variable, légère et spécifiquement adaptée pour les petits avions et les ULM. Cette aile est caractérisée par le fait qu'elle comporte une voilure souple déployable de manière continue dans le prolongement de l'aile rigide au moyen d'au moins un système articulé et par le fait que ladite voilure souple et ledit système articulé sont complètement incorporés dans la partie arrière de l'aile rigide en configuration de vol de croisière.

Selon l'invention un mécanisme unique est utilisé pour déployer la voilure souple et maintenir la tension ce qui présente des avantages certains par rapport aux techniques connues. Par ailleurs le réglage de ladite tension peut être effectué en continu de manière très fine, autorisant ainsi des positions intermédiaires pour le déploiement de la voilure souple et donc des situations de vol particulières.

La forte augmentation de la portance, lorsque la voilure souple est complètement déployée, permet à l'aéroplane de diminuer fortement sa vitesse lors de la phase d'atterrissage ou de décoller plus facilement.

La voilure souple est tout particulièrement adaptée pour des avions légers. Une tel dispositif à portance variable permet d'atteindre des compromis satisfaisants dans toutes les configurations de vol.

D'autres caractéristiques et avantages de l'invention se dégageront de la description qui va suivre en regard des dessins annexés qui ne sont donnés qu'à titre d'exemples non limitatifs.

La figure 1 est une vue de dessus et en perspective d'un avion en phase de vol de croisière, la voilure étant repliée.

La figure 2 est une vue de dessus et en perspective d'un avion et de la voilure déployée en configuration de décollage ou d'atterrissage.

La figure 3 est une vue en perspective de l'aile montrant la voilure repliée.

La figure 4 est une vue en perspective de l'aile qui montre la voilure déployée.

La figure 5 est une vue de dessus et en coupe dans le plan de l'aile, illustrant le mécanisme de déploiement de la voilure, celle-ci étant en position repliée.

La figure 6 est une vue de dessus et en coupe dans le plan de l'aile, illustrant le mécanisme de déploiement de la voilure, celle-ci étant en position déployée.

La figure 7 est une vue de détail et en perspective du mécanisme articulé permettant le déploiement et le repli de la voilure.

La figure 8 illustre l'agencement des différents éléments qui permettent l'extension de la voilure.

La figure 9 est une vue en coupe du bord de fuite de l'aile, selon un plan perpendiculaire à son envergure, lorsque la voilure est repliée.

La figure 10 est une vue en coupe du bord de fuite de l'aile, selon un plan perpendiculaire à son envergure, lorsque la voilure est déployée.

La figure 11 illustre une variante de système articulé selon l'invention.

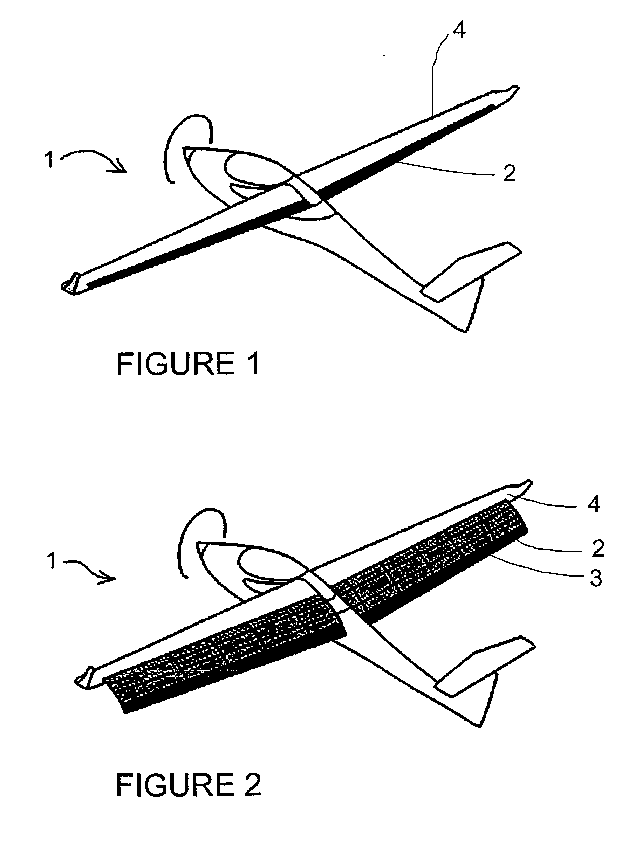

Comme le montre les figures 1 et 2 le dispositif selon l'invention permet une augmentation de la surface alaire très importante.

La figure 1 illustre une aile rigide 4 dont l'aérodynamique est très performante, portée par un aéroplane 1 de type petit avion, de faible surface alaire, typiquement moins de 6 m², et d'envergure inférieure à 8 mètres, de fort allongement et de grande finesse.

La figure 2 montre la voilure souple 3 déployée, cette voilure augmente fortement la surface alaire pour atteindre typiquement plus de 10 m² pour les configurations de vol à basses vitesses.

La voilure souple 3 est fabriquée avec un matériau léger et résistant tel que par exemple celui employé pour fabriquer les voilures de parapentes, de deltaplanes ou les voiles utilisées en nautisme.

La voilure souple 3 peut par exemple être constituée d'un tissu et/ou d'un assemblage de matériaux flexibles en polymères, laquelle voilure pouvant être renforcée par des structures additionnelles et/ou des traitements adaptés pour améliorer sa résistance mécanique, sa résistance à l'usure ou aux intempéries, pour imperméabiliser la structure, etc...

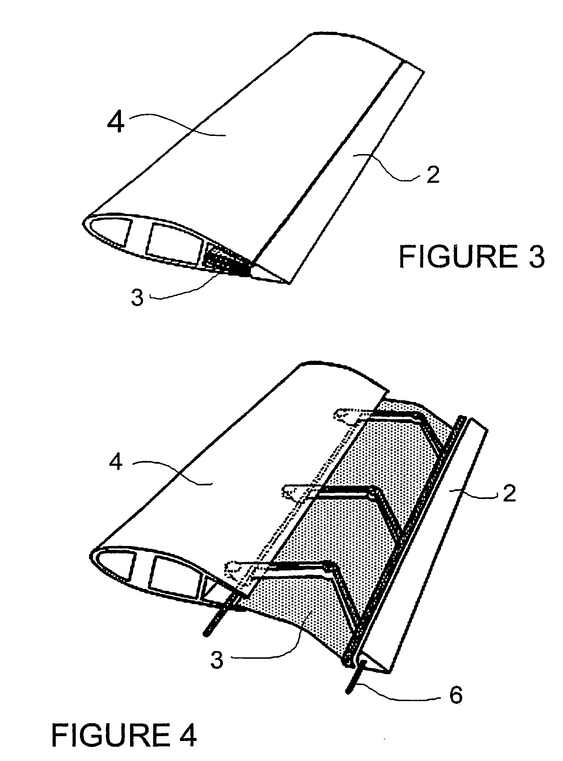

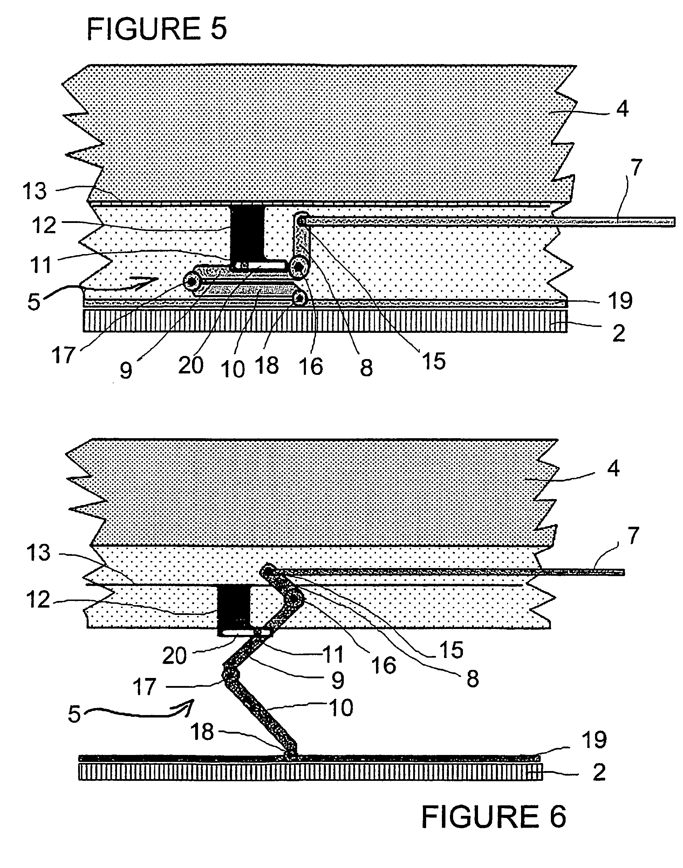

Le dispositif selon l'invention comporte un prolongement déployable vers l'arrière de l'aile constitué des parties essentielles suivantes :
- Un aileron 2 ayant la fonction d'un volet. Lequel aileron est commandé au moyen de la tringle 6, visible sur la figure 4, reliée au fuselage et pouvant se déplacer le long de celui-ci pour accompagner le mouvement de la voilure souple 3,
- une voilure souple 3 qui peut se replier à l'intérieur de la structure de l'aile 4 en accordéon, tel que cela est représenté sur la figure 3,
- un système articulé 5 représenté sur les figures 5, 6 et 7 permettant le déploiement et le repli de la voilure à l'intérieur de l'aile.

Plus précisément, tel que cela est illustré sur la figure 4, l'aileron 2 constitue le bord de fuite de l'aile, son orientation permet de manoeuvrer l'avion, de manière classique. Lequel aileron est rigide et relié par une tringle 6 au fuselage pour son mouvement. Laquelle tringle possède la particularité de se déplacer vers l'arrière lorsque la voilure souple 3 se déploie et de se mouvoir vers l'avant lorsque la voilure est repliée, de manière à rester toujours idéalement positionnée pour son actionnement.

Le mécanisme de déploiement de la voilure souple 3 est illustré sur les figures 5 à 8. Les figures 5 et 6 illustrent le système articulé 5 en vue de dessus dans la position repliée et en vue déployée.

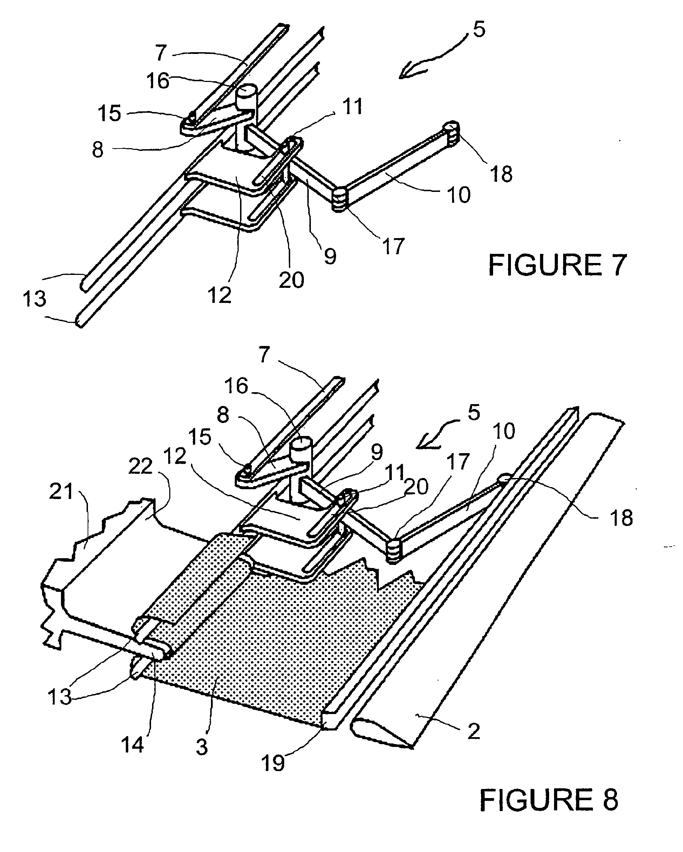

Tel que représenté sur la figure 7, le mécanisme articulé de déploiement est actionné depuis l'avion au moyen d'une barre de commande 7, qui, par un mouvement de va et vient dans la direction de l'aile, entraîne différentes parties 8, 9 et 10 articulées les unes par rapport aux autres. Lesdites parties étant reliées entre elles et à leurs extrémités avec des axes 15, 16, 17 et 18. Les parties et les axes constitutifs du système articulés sont illustrés sur les différentes figures, dans cet exemple particulier de réalisation, elles forment un bras articulé. Ledit bras articulé se plie et se déplie en accordéon pour rentrer ou sortir la voilure souple3.

Ledit bras articulé est fixé à l'intérieur de l'aile et sur celle-ci au moyen de l'axe 16, et, à l'autre extrémité, au moyen de l'axe 18 sur le support 19 de l'aileron.

La partie intermédiaire 9 est solidaire d'un appui 11 formant axe et servant de pivot pour les différents éléments articulés. Ledit appui 11 est un axe soudé au milieu de la partie 9 et conformé pour coulisser par au moins une de ses extrémités dans au moins un évidement 20 disposé dans au moins une plaque 12. Laquelle plaque étant solidairement fixée sur une tige 13 qui régule le déploiement de la voilure 3.

Dans l'exemple illustré par les figures 7 à 10 l'appui 11 coulisse dans deux évidements 20 fixés sur les deux tiges 13.

La voilure 3 fait un circuit autour des tiges 13 et autour de l'extrémité 14 d'un guide rigide 21 en forme de W. Le circuit de la voilure souple 3 à l'intérieur de l'aile s'apparente à un parcours en zig-zag ou en accordéon.

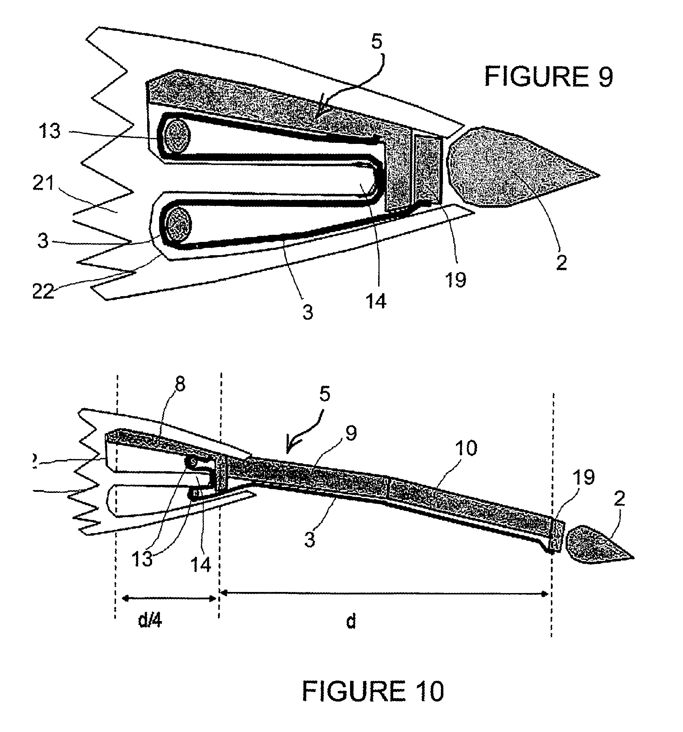

Comme le montre les figures 9 et 10 le guide rigide 21 est placé à l'intérieur de l'aile et est solidaire de celle-ci. La distance d/4 entre l'extrémité 14 et les cavités intérieures 22 du guide rigide 21 en forme de W détermine l'extension maximum possible d pour la voilure 3.

En effet, lorsque la voilure souple 3 est repliée dans l'aile 4, tel que cela est illustré dans les figures 5 et 9, les tiges 13 sont proches des cavités intérieures 22 du guide rigide 21 en forme de W. La voilure souple 3 a donc un cheminement maximum le long du W.

Lorsque la voilure est déployée, comme le montre les figures 6, 8 et 10, c'est à dire lorsque les tiges 13 se sont déplacées vers l'arrière sous l'action des mouvements des différentes parties articulées, seule une petite longueur de voilure reste dans l'aile autour des tiges 13 et de l'extrémité 14 du guide rigide 21. Le cheminement de la voilure souple le long du W est donc minimal.

Le mouvement des tiges 13 raccourcit ou rallonge la longueur de la voilure dans l'aile selon un dispositif interdisant tout coincement de celle-ci, même en cas de météo défavorable et de grand vent.

Ainsi, selon l'invention, le repli ou le déploiement de la voilure souple 3 est obtenu par la modification de la longueur du circuit de la voilure à l'intérieur de l'aile rigide 4, ledit circuit étant raccourci lorsque l'aile est déployée et allongé lorsque l'aile est repliée.

Lors du déploiement ou du repli de la voilure 3 sous l'action de la barre de commande 7 les différentes parties articulés pivotent autour des différents axes en provoquant un déplacement de l'appui 11 qui décrit un arc de cercle. Au cours de son mouvement l'appui 11 entraîne les tiges 13 qui se déplacent vers l'arrière ou vers l'avant dans le plan de l'aile 4 en déployant ou repliant l'aile souple 3 par la modification de la longueur du parcours de la voilure à l'intérieur de l'aile rigide 4.

Selon le dispositif décrit, et en référence à la figure 10, la distance d/4 entre les cavités intérieures 22 du guide rigide en forme de W et l'extrémité 14, détermine l'extension possible d de la voilure, soit, compte tenu du cheminement illustré sur les figures, quatre fois la longueur libre disponible à l'intérieur de l'aile.

Suivant le même principe il est possible d'augmenter encore l'extension maximale de la voilure souple 3 en ajoutant des tiges 13 supplémentaires, parallèles les unes aux autres, et en intercalant des guides rigides 21.

En généralisant, l'extension de voilure souple est 2n fois la distance libre disponible à l'intérieur de l'aile rigide 4 entre les cavités intérieures 22 et les extrémités 14, n étant le nombre de tiges 13 parallèles incorporées dans l'aile rigide.

Plusieurs variantes sont possibles notamment en ce qui concerne le placement relatif de la voilure par rapport aux parties articulées qui réalisent le déploiement, ladite voilure pouvant se situer dessus et/ou dessous les bras articulés sans sortir du cadre de l'invention.

De même, il est concevable d'améliorer le dispositif de glissement de la voilure à l'intérieur de l'aile rigide en plaçant en lieu et place des tiges 13 et à l'extrémité 14 du guide rigide 21 des tubes montés sur roulements afin de favoriser les divers déplacements de la voilure et éviter les frottements.

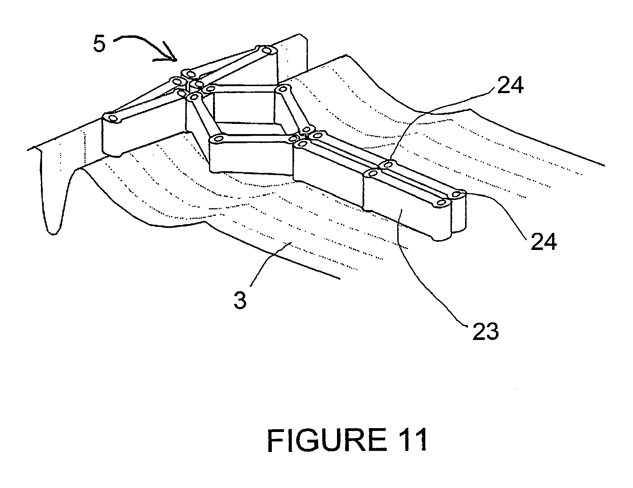

Une autre variante importante de l'invention illustrée sur la figure 11 consiste à réaliser un système articulé 5 constitué de plaques élémentaires 23 fixées par points 24, au niveau des axes des articulations, à la voilure souple 3. Lesquelles plaques élémentaires 23 se déploient en entraînant la voilure souple. Le système articulé 5, en extension maximale est perpendiculaire à l'envergure de l'aile. Dans sa configuration repliée, à l'intérieur de l'aile, les plaques constitutives du bras sont repliées en accordéon, tout comme la voilure 3 qui est fixée points à points.

Les axes et parties constitutives des bras articulés qui participent au mécanisme de repliement déploiement de la voilure seront de préférence fabriqués avec des matériaux rigides et résistants aux chocs. Un grand nombre de matériaux et une grande variété de pièces peuvent être utilisés pour aboutir au fonctionnement recherché, sans sortir du cadre de l'invention.

## Revendications

1. Aile de portance variable pour avions ou ULM comportant
- une voilure souple (3) qui peut être déployée de manière continue dans le prolongement d'une aile rigide (4) au moyen d'au moins un système articulé (5), ledit système comportant au moins un bras (9),
- ladite voilure souple (3) et ledit système articulé (5) étant complètement incorporés dans la partie arrière de l'aile rigide (4) en configuration de vol de croisière,
**caractérisée en ce que**
- ladite voilure souple (3) est repliée en accordéon dans l'aile rigide (4) de façon à ce que les deux surfaces de la voilure souple ne sont pas en regard l'une de l'autre.

2. Aile de portance variable pour avions ou ULM selon la revendication 1 dans laquelle le repli ou le déploiement de la voilure souple (3) est obtenu par la modification de la longueur du circuit de la voilure souple (3) à l'intérieur de l'aile rigide (4), ledit circuit étant raccourci lorsque la voilure souple (3) est déployée et allongé lorsque la voilure souple (3) est repliée.

3. Aile de portance variable pour avions ou ULM selon la revendication 2 dans laquelle la voilure souple (3) est repliée dans l'aile rigide (4) au moyen d'au moins une tige (13) pouvant se déplacer dans le plan de l'aile rigide (4), laquelle tige (13) étant reliée au système articulé (5).

4. Aile de portance variable pour avions ou ULM selon la revendication 3 dans laquelle l'extension maximale de la voilure souple (3) est 2n fois la distance libre disponible à l'intérieur de l'aile rigide (4), n étant le nombre de tiges (13) parallèles incorporées dans l'aile rigide (4), de préférence n=2.

5. Aile de portance variable pour avions ou ULM selon la revendication 1 dans laquelle le système articulé (5) comporte au moins un bras (9), ledit bras (9) disposant d'un axe soudé (11) coopérant avec au moins un évidemment (20) porté par une plaque (12) solidairement liée à au moins une tige (13).

6. Aile de portance variable pour avions ou ULM selon la revendication 1 dans laquelle un mécanisme d'action d'un aileron (2) se déplace le long du fuselage de l'avion ou de l'ULM simultanément au déploiement ou au repli de l'aile (4) pour permettre le pilotage de l'aéroplane quelle que soit la configuration de la voilure souple (3).

7. Aile de portance variable pour avions ou ULM selon la revendication 1 dans laquelle au moins un et de préférence deux systèmes articulés (5) sont présents.

8. Aile de portance variable pour avions ou ULM selon la revendication 1 dans laquelle la voilure souple (3) est constituée de matériaux flexibles, laquelle voilure pouvant être renforcée par des structures additionnelles et/ou des traitements adaptés pour améliorer sa résistance mécanique et à l'usure.

9. Aile de portance variable pour avions ou ULM selon la revendication 1 dans laquelle la voilure souple (3) est située dessus et/ou dessous le système articulé (5).

## Claims

1. Variable-lift wing for planes or ULMs comprising:
- a flexible aerofoil (3) which can be deployed in continuous manner in the extension of a rigid wing (4) by means of at least one articulated system (5), said system comprising at least one arm (9),
- said flexible aerofoil (3) and said articulated system (5) being completely incorporated in the rear part of the rigid wing (4) in cruising flight configuration,
**characterized in that** said flexible aerofoil (3) is folded into an accordion shape in the rigid wing (4) so that the two surfaces of the flexible aerofoil are not facing one another.

2. Variable-lift wing for planes or ULMs according to claim 1 wherein retraction or deployment of the flexible aerofoil (3) is achieved by modifying the length of the circuit of the flexible aerofoil (3) inside the rigid wing (4), said circuit being shortened when the flexible aerofoil (3) is deployed and lengthened when the flexible aerofoil (3) is retracted.

3. Variable-lift wing for planes or ULMs according to claim 2 wherein the flexible aerofoil (3) is retracted into the rigid wing (4) by means of at least one rod (13) able to move in the plane of the rigid wing (4), which rod (13) being connected to the articulated system (5).

4. Variable-lift wing for planes or ULMs according to claim 3 wherein the maximum extension of the flexible aerofoil (3) is 2n times the free distance available inside the rigid wing (4), n being the number of parallel rods (13) incorporated in the rigid wing (4), preferably n=2.

5. Variable-lift wing for planes or ULMs according to claim 1 wherein the articulated system (5) comprises at least one arm (9), said arm (9) being provided with a welded spindle-rod 11 operating in conjunction with at least one groove (20) borne by a plate (12) securedly attached to at least one rod (13).

6. Variable-lift wing for planes or ULMs according to claim 1 wherein a mechanism for actuation of an aileron (2) moves along the fuselage of the plane or ULM at the same time as deployment or retraction of the wing (4) to enable the airplane to be piloted whatever the configuration of the flexible aerofoil (3).

7. Variable-lift wing for planes or ULMs according to claim 1 wherein at least one and preferably two articulated systems (5) are present.

8. Variable-lift wing for planes or ULMs according to claim 1 wherein the flexible aerofoil (3) is constituted by flexible materials, which aerofoil can be reinforced by additional structures and/or suitable treatments to improve the mechanical strength and wear resistance thereof.

9. Variable-lift wing for planes or ULMs according to claim 1 wherein the flexible aerofoil (3) is located above and/or below the articulated system (5).

## Patentansprüche

1. Variabler Auftriebsflügel für Flugzeuge oder Leichtflugzeuge, der umfasst:
- eine flexible Tragfläche (3), die kontinuierlich in Verlängerung eines starren Tragflügels (4) mittels mindestens eines Gelenksystems (5) ausgefahren werden kann, welches System mindestens einen Arm (9) umfasst,
- welche flexible Tragfläche (3) und welches Gelenksystem (5) im Reiseflug vollkommen in den hinteren Teil des starren Tragflügels (4) eingezogen ist,
**dadurch gekennzeichnet, dass** die flexible Tragfläche (3) ziehharmonikförmig in den starren Tragflügel (4) eingezogen wird, sodass die beiden Oberflächen der flexiblen Tragfläche einander nicht gegenüberliegen.

2. Variabler Auftriebsflügel für Flugzeuge oder Leichtflugzeuge nach Anspruch 1, bei dem das Ein- oder Ausfahren der flexiblen Tragfläche (3) durch Veränderung der Länge der Bahn der flexiblen Tragfläche (3) innerhalb des starren Flügels (4) erreicht wird, wobei die Bahn kurz ist, wenn die flexible Tragfläche (3) ausgefahren ist, und länger ist, wenn die flexible Tragfläche (3) eingefahren ist.

3. Variabler Auftriebsflügel für Flugzeuge oder Leichtflugzeuge nach Anspruch 3, bei dem die flexible Tragfläche (3) in den starren Flügel (4) mittels mindestens einer Stange (13) eingezogen wird, die sich auf der Ebene des starren Flügels (4), bewegen kann und welche Stange (13) mit dem Gelenksystem (5) verbunden ist.

4. Variabler Auftriebsflügel für Flugzeuge oder Leichtflugzeuge nach Anspruch 3, bei dem die maximale Ausdehnung der flexiblen Tragfläche (3) 2n mal die freie, innerhalb des starren Flügels (4) verfügbare Distanz beträgt, wobei n die Anzahl paralleler, in den starren Flügel (4) integrierter Stangen (13), vorzugsweise n=2 ist.

5. Variabler Auftriebsflügel für Flugzeuge oder Leichtflugzeuge nach Anspruch 1, bei dem das Gelenksystem (5) mindestens einen Arm (9) umfasst, welcher Arm (9) eine angeschweißte Achse (11) aufweist, die mit mindestens einer Aussparung (20) zusammenwirkt, die von einer Platte (12) getragen wird, die fest mit mindestens einer Stange (13) verbunden ist.

6. Variabler Auftriebsflügel für Flugzeuge oder Leichtflugzeuge nach Anspruch 1, bei dem sich ein Betätigungsmechismus für ein Querruder (2) entlang dem Rumpf des Flugzeugs oder Leichtflugzeugs gleichzeitig mit dem Aus- oder Einfahren des Flügels (4) bewegt, um das Steuern des Fluggeräts unabhängig von dem Zustand der flexiblen Tragfläche (3) zu erlauben.

7. Variabler Auftriebsflügel für Flugzeuge oder Leichtflugzeuge nach Anspruch 1, bei dem mindestens ein Gelenksystem (5) und vorzugsweise zwei Gelenksysteme (5) vorgesehen sind.

8. Variabler Auftriebsflügel für Flugzeuge oder Leichtflugzeuge nach Anspruch 1, bei dem die flexible Tragfläche (3) aus flexiblen Materialien besteht, welche Tragfläche durch zusätzliche Ausstattungen und/oder geeignete Behandlungen verstärkt sein kann, die geeignet sind, ihre mechanische und Verschleißfestigkeit zu erhöhen.

9. Variabler Auftriebsflügel für Flugzeuge oder Leichtflugzeuge nach Anspruch 1, bei dem die flexible Tragfläche (3) über und/oder unter dem Gelenksystem (5) angeordnet ist.
